# EUROPÄISCHE PATENTSCHRIFT

(11) **EP 3 884 101 B1**
(45) Veröffentlichungstag und Bekanntmachung des Hinweises auf die Patenterteilung: **12.02.2025**
(21) Anmeldenummer: 19808764.5
(22) Anmeldetag: 21.11.2019
(51) Int. Cl.: E01B 7/20, E01B 19/00, E01B 26/00, E01F 7/02

(54) **ABWEISERVORRICHTUNG UND ANORDNUNG ZUM SCHUTZ EINER GLEISANORDNUNG VOR UMWELTEINFLÜSSEN**
DEFLECTING DEVICE AND ASSEMBLY FOR PROTECTING A TRACK ASSEMBLY FROM ENVIRONMENTAL INFLUENCES
DISPOSITIF DÉFLECTEUR ET ENSEMBLE POUR LA PROTECTION D'UN AGENCEMENT DE RAILS CONTRE DES INFLUENCES ENVIRONNEMENTALES

(30) Priorität: 22.11.2018 AT 510252018
(43) Veröffentlichungstag der Anmeldung: 29.09.2021
(73) Patentinhaber: Porr Bau GmbH, 1100 Wien (AT)
(72) Erfinder: WRUMEC, Christian, 8430 Leibnitz (AT); MARTIN, Michael, 2362 Biedermannsdorf (AT); KREMNITZER, Peter, 1220 Wien (AT)
(74) Vertreter: Puchberger & Partner Patentanwälte
(86) Internationale Anmeldenummer: PCT/EP2019/082039
(87) Internationale Veröffentlichungsnummer: WO 2020/104573

(56) Entgegenhaltungen:
- EP-A1- 2 789 737
- EP-B1- 1 740 772
- WO-A1-01/66859
- CN-U- 204 475 066
- DE-A1- 102014 000 296

## Beschreibung

Die Erfindung betrifft eine Abweiservorrichtung zum Schutz einer Gleisanordnung vor Umwelteinflüssen, wie Wind, Schnee oder Sand, sowie eine Anordnung, umfassend eine Gleisanordnung und eine erfindungsgemäße Abweiservorrichtung.

Abweiservorrichtungen zum Schutz eines Gleises vor Umwelteinflüssen, wie Wind, Schnee oder Sand, sind in unterschiedlichen Ausführungsformen bekannt und publiziert.

Die EP 1 740 772 B1 offenbart beispielsweise einen Wind- und Schneeschutz, bei dem zwei flexible Schirme in entgegengesetzte Richtungen von einem Befestigungsteil abstehen, wobei die beiden Schirme aus Gruppen von Borsten gebildet sind. Die nach unten ragenden Borsten des einen Schirms können sich flexibel verformen und dadurch eine Abdichtung gegenüber einem unebenen Untergrund herstellen. Derartige Anordnungen sind als solche seit jeher als sogenannte Bürstendichtungen bekannt. Der andere Schirm ragt mit seinen Borsten nach oben und bildet dadurch einen flexiblen Windabweiser. Auch derartige bürstenförmige Windabweiserstreifen sind als solche seit jeher bekannt.

Nun hat sich in der Praxis herausgestellt, dass es vorteilhaft sein kann, die seitlichen Abweiservorrichtungen nicht komplett dichtend auszubilden, sondern einen Teil der Luftströmung, also des Windes, hindurchzulassen. Dadurch verbessern sich die strömungstechnischen Verhältnisse dahingehend, dass weniger Wind bzw. weniger vom Wind transportierter Schnee oder Sand auf die Gleisanordnung trifft. Ein gezieltes Durchlassen eines Teilvolumenstroms ist der EP 1 740 772 B1 nicht zu entnehmen.

Die EP 1 740 772 B1 offenbart überdies einen nach oben stehenden Wind- und Schneeschutz, der durch eine Lamelle, insbesondere auch eine Vielzahl an Membransegmenten, gebildet ist.

Derartige Membransegmente sind nicht dazu geeignet, einen Teilvolumenstrom des Windes hindurchzulassen. Ferner neigen geschlitzte Bänder bei mechanischen Belastungen dazu, weiter einzureißen, womit die Wirkung dieser Abweiser über die Zeit beeinträchtigt wird.

Aufgabe der Erfindung ist es nun, die Nachteile des Standes der Technik zu überwinden. Insbesondere ist es Aufgabe der Erfindung, eine Abweiservorrichtung zu schaffen, die eine effiziente, strömungstechnisch optimierte Abweisung über lange Standzeiten ermöglicht.

Die erfindungsgemäße Aufgabe wird insbesondere durch die Merkmale der unabhängigen Patentansprüche gelöst.

Die Erfindung betrifft insbesondere eine Abweiservorrichtung zum Schutz einer Gleisanordnung und insbesondere einer Weiche vor Umwelteinflüssen, wie Wind, Schnee oder Sand,- umfassend eine langgestreckte, entlang einer Längsrichtung verlaufende Halteleiste zur Anbringung seitlich neben der Gleisanordnung, wobei an der Halteleiste eine flexible Bodenschürze und ein flexibler Windschirm angebracht sind, wobei die Bodenschürze, der langgestreckten Kontur der Halteleiste folgend, von der Halteleiste Richtung Untergrund absteht, wobei der Windschirm, der langgestreckten Kontur der Halteleiste folgend, von der Halteleiste nach oben absteht.

Erfindungsgemäß ist vorgesehen, dass in der Bodenschürze Haupteinschnitte vorgesehen sind, die sich jeweils schlitzförmig von der Außenkante der Bodenschürze bis in eine Funktionsöffnung mit einer abgerundeten Form erstrecken.

Gegebenenfalls ist vorgesehen, dass in der Bodenschürze Nebeneinschnitte vorgesehen sind, die sich jeweils abschnittsweise schlitzförmig von der Außenkante der Bodenschürze bis in eine Funktionsöffnung mit einer abgerundeten Form erstrecken, jedoch in einem Bereich zwischen der Außenkante und der Funktionsöffnung unterbrochen sind.

Gegebenenfalls ist vorgesehen, dass die Bodenschürze mehrere flexible Bodenlamellen zur Anpassung der Bodenschürze an eine unebene Oberfläche umfasst.

Gegebenenfalls ist vorgesehen, dass die Bodenlamellen durch die in der Bodenschürze vorgesehenen Haupteinschnitte und gegebenenfalls durch die in der Bodenschürze vorgesehenen Nebeneinschnitte gebildet sind.

Gegebenenfalls ist vorgesehen, dass in dem Windschirm Haupteinschnitte vorgesehen sind, die sich jeweils schlitzförmig von der Außenkante des Windschirms bis in eine Funktionsöffnung mit einer abgerundeten Form erstrecken

Gegebenenfalls ist vorgesehen, dass der Windschirm durchgehend und unterbrechungsfrei ausgebildet ist.

Gegebenenfalls ist vorgesehen, dass in dem Windschirm Nebeneinschnitte vorgesehen sind, die sich jeweils abschnittsweise schlitzförmig von der Außenkante des Windschirms bis in eine Funktionsöffnung mit einer abgerundeten Form erstrecken, jedoch in einem Bereich zwischen der Außenkante und der Funktionsöffnung unterbrochen sind.

Gegebenenfalls ist vorgesehen, dass der Windschirm mehrere flexible Windlamellen umfasst, und dass die Windlamellen durch die im Windschirm vorgesehenen Haupteinschnitte und gegebenenfalls durch die im Windschirm vorgesehenen Nebeneinschnitte gebildet sind.

Gegebenenfalls ist vorgesehen, dass die Bodenschürze und der Windschirm einen einzigen bandförmigen Grundkörper aus einem elastischen Material umfassen, dass der bandförmige Grundkörper in seinem Mittenbereich entlang der Längsrichtung mit der Halteleiste verbunden ist, und dass der Grundkörper quer zu seiner Längsrichtung beidseitig von der Halteleiste absteht.

Gegebenenfalls ist vorgesehen, dass die Bodenschürze und der Windschirm je einen bandförmigen Grundkörper aus einem elastischen Material umfassen, dass die beiden bandförmigen Grundkörper entlang ihrer Längsrichtung mit der Halteleiste verbunden sind, und dass die Grundkörper jeweils quer zu ihren Längsrichtungen beidseitig von der Halteleiste abstehen.

Gegebenenfalls ist vorgesehen, dass die Funktionsöffnungen jeweils als Durchgangsöffnung mit abgerundetem oder rundem Querschnitt ausgebildet sind.

Gegebenenfalls ist vorgesehen, dass die Funktionsöffnungen der Bodenschürze und/oder des Windschirms einen freien Querschnitt zwischen 0,5 cm² und 5 cm², insbesondere zwischen 0,5 cm² und 2 cm², aufweisen.

Gegebenenfalls ist vorgesehen, dass die Bodenlamellen streifenförmig ausgebildet sind und eine entlang der Längsrichtung gemessene Breite zwischen 1 cm und 5 cm, insbesondere zwischen 2 cm und 4 cm, aufweisen, und/oder dass die Bodenlamellen streifenförmig ausgebildet sind und eine quer zur Längsrichtung gemessene Länge zwischen 5 cm und 25 cm, insbesondere zwischen 4 cm und 15 cm, aufweisen.

Gegebenenfalls ist vorgesehen, dass die Windlamellen streifenförmig ausgebildet sind und eine entlang der Längsrichtung gemessene Breite zwischen 5 cm und 20 cm, insbesondere zwischen 8 cm und 12 cm, aufweisen, und/oder dass die Windlamellen streifenförmig ausgebildet sind und eine quer zur Längsrichtung gemessene Länge zwischen 5 cm und 15 cm, insbesondere zwischen 5 cm und 10 cm, aufweisen.

Gegebenenfalls ist vorgesehen, dass die Windlamellen und/oder die Bodenlamellen in den Bereichen zwischen den Funktionsöffnungen eine geringere entlang der Längsrichtung gemessene Breite aufweisen als in den Bereichen zwischen den Schlitzen.

Gegebenenfalls ist vorgesehen, dass die Einschnitte, insbesondere die Haupteinschnitte und/oder die Nebeneinschnitte, eine entlang der Längsrichtung gemessene freie Breite aufweisen, die kleiner ist als die entlang der Längsrichtung gemessene freie Breite der Funktionsöffnungen und insbesondere eine entlang der Längsrichtung gemessene freie Breite von 0 cm bis 1 cm aufweisen.

Gegebenenfalls ist vorgesehen, dass die Windlamellen und/oder die Bodenlamellen und/oder der oder die Grundkörper aus einem UV-beständigen Elastomer, wie insbesondere EPDM oder aus Weich-PVC, und gegebenenfalls mit einer Verstärkungsstruktur, gebildet sind.

Gegebenenfalls ist vorgesehen, dass die Windlamellen und/oder die Bodenlamellen und/oder der oder die Grundkörper aus einem Band mit einer Dicke von 0,2 cm bis 0,5 cm und insbesondere von 0,3 cm gebildet sind.

Gegebenenfalls ist vorgesehen, dass der Windschirm und/oder die Bodenschürze mehrschichtig ausgebildet sind und insbesondere zwei oder mehr parallel zueinander verlaufende Grundkörper aufweisen, wobei einer der Grundkörper, zur Erhöhung der Festigkeit des Windschirms und/oder der Bodenschürze eine größere Steifigkeit aufweist als der parallel verlaufende Grundkörper.

Gegebenenfalls ist vorgesehen, dass der Grundkörper des Windschirms mit mindestens einer Verstärkungswulst versehen ist, die entlang der Längsrichtung verläuft.

Gegebenenfalls betrifft die Erfindung eine Anordnung, umfassend eine Gleisanordnung mit mindestens zwei Schienen, die über Oberbaukomponenten, wie beispielsweise Eisenbahnschwellen, miteinander verbunden und am Gleisunterbau, insbesondere am Untergrund, abgestützt sind.

Gegebenenfalls ist vorgesehen, dass seitlich neben der Außenseite mindestens einer Schiene und dem Schienenverlauf folgend eine Abweiservorrichtung nach einem der vorangegangenen Ansprüche vorgesehen ist.

Gegebenenfalls ist vorgesehen, dass eine Haltevorrichtung vorgesehen ist, über die Halteleiste mit der Gleisanordnung verbunden ist.

Gegebenenfalls ist vorgesehen, dass sich der Windschirm bis zum Niveau des Schienenkopfes erstreckt, oder dass der Windschirm den Schienenkopf nach oben überragt, und insbesondere dass der Windschirm das Niveau des Schienenkopfs nach oben um 1 cm bis 5 cm, vorzugsweise um 2 cm, überragt.

Gegebenenfalls ist vorgesehen, dass der Zwischenraum zwischen der Halteleiste und der darunterliegenden Oberfläche durch die flexibel verformte Bodenschürze abgedeckt ist.

Gegebenenfalls ist vorgesehen, dass beidseitig, seitlich neben den Außenseiten der Schienen und dem Schienenverlauf folgend, je eine erfindungsgemäße Abweiservorrichtung vorgesehen ist, und dass die Schienen und insbesondere die Weiche zwischen den beiden Abweiservorrichtung angeordnet sind.

Gegebenenfalls ist vorgesehen, dass die Bodenschürze und/oder der Windschirm über einen Schnellverschluss, insbesondere über einen werkzeuglos betätigbaren Verschluss, mit der Gleisanordnung verbunden ist oder sind.

Gegebenenfalls ist vorgesehen, dass mindestens ein quer zum Schienenverlauf verlaufender Windschirm vorgesehen ist, der insbesondere zwischen zwei Schienen einer Gleisanordnung verläuft und als Windabweiser gegen entlang des Schienenverlaufs verlaufende Luftbewegungen wirkt.

Erfindungsgemäß ist eine Bodenschürze vorgesehen, die von einem als Halteleiste ausgebildeten Halteteil Richtung Boden verläuft. Diese flexible Bodenschürze weist mehrere Einschnitte, insbesondere sogenannte Haupteinschnitte, auf, die sich jeweils schlitzförmig von der Außenkante der Bodenschürze bis in eine Funktionsöffnung erstrecken.

Die Funktionsöffnungen weisen dabei jeweils eine abgerundete Form auf und dienen - als erste Funktion - als Durchgangsöffnung zur Durchleitung eines Teilluftstroms.

Darüber hinaus wirkt die abgerundete Form der Funktionsöffnung in synergetischer Weise - als zweite Funktion - gegen die Reißneigung einer geschlitzten Bodenschürze. So neigen schmale Schlitze oder Einschnitte dazu, bei mechanischer Belastung weiter einzureißen. Durch den Abschluss der oder Einschnitte in einer abgerundeten Funktionsöffnung wird diese Neigung maßgeblich verringert. Durch das Vorsehen mehrerer paralleler Haupteinschnitte, die bevorzugt jeweils in eine Funktionsöffnung münden, werden Bodenlamellen gebildet. Diese Bodenlamellen können sich im Wesentlichen unabhängig voneinander an einen unebenen Untergrund bzw. an eine unebene Oberfläche anpassen.

Überdies weisen die Funktionsöffnungen eine größere freie Breite auf als die oder Einschnitte, die in diese Funktionsöffnungen münden. Dadurch haben auch die streifenförmig ausgebildeten Lamellen, die durch die oder Einschnitte begrenzt werden, im Bereich der oder Einschnitte eine größere Breite als im Bereich zwischen den Funktionsöffnungen. Zwischen den Funktionsöffnungen wird dadurch, wiederum in synergetischer Weise - als dritte Funktion - eine Art Gelenk gebildet.

Als weiterer Vorteil kann angegeben werden, dass die erfindungsgemäße Abweiservorrichtung durch ihre spezielle Ausgestaltung weniger stark zu Verschmutzungen neigt, wie herkömmliche Abweiservorrichtung, die beispielsweise als Bürsten ausgebildet sind. Darüber hinaus reduziert die erfindungsgemäße Abweiservorrichtung bevorzugt auch den Schotterflug bei geschottertem Unterbau.

Zudem hat sich in der Praxis gezeigt, dass durch die spezielle Ausgestaltung der erfindungsgemäßen Abweiservorrichtung auch der Nagerbiss bei den Leitungen der Weichen verringert werden kann.

Zusätzlich zu den Haupteinschnitten können weitere Einschnitte, sogenannte Nebeneinschnitte, vorgesehen sein. Diese Nebeneinschnitte münden zwar ebenfalls in eine Funktionsöffnung, können jedoch in einem Bereich zwischen der Außenkante und der Funktionsöffnung unterbrochen sein, sodass zwei durch einen Nebeneinschnitt voneinander getrennte streifenförmige Lamellen in diesem Bereich miteinander verbunden sind oder bleiben. Durch diese Nebeneinschnitte kann die Flexibilität der Bodenschürze weiter verbessert und gesteuert werden. Insbesondere sind die Enden der Lamellen, die zwischen den Haupteinschnitten und den Nebeneinschnitten liegen, frei und können sich daher an eine unebene Oberfläche anpassen.

Der nach oben weisende flexible Windschirm kann ebenfalls Haupteinschnitte und gegebenenfalls auch Nebeneinschnitte analog zu den Einschnitten der Bodenschürze aufweisen. Bevorzugt sind die Einschnitte des Windschirms entlang der Längserstreckung oder Längsrichtung weiter voneinander beabstandet als die Einschnitte der Bodenschürze, womit die Windlamellen des Windschirms breiter ausgebildet sind als die Bodenlamellen der Bodenschürze.

Bevorzugt wird eine derartige Abweiservorrichtung seitlich neben einer Gleisanordnung, insbesondere seitlich neben einer Weiche, angeordnet. Durch den Schutz können bewegte Teile der Weiche besser vor Umwelteinflüssen geschützt werden. Insbesondere kann durch die Ablenkung von Wind und Schnee auch die zur Beheizung einer Weiche benötigte Energie verringert werden.

Gemäß einer bevorzugten Ausführungsform sind beidseitig der Gleisanordnung, insbesondere beidseitig der Weiche, erfindungsgemäße Abweiservorrichtungen vorgesehen.

Die Bodenschürze der Abweiservorrichtung ragt Richtung jener Oberfläche, die beispielsweise durch Teile des Gleisunterbaus und des Gleisoberbaus, insbesondere durch Eisenbahnschwellen und ein Schotterbett, gebildet ist. Der flexible Windschirm ragt nach oben, zumindest bis zum Niveau des Schienenkopfes, bevorzugt über den Schienenkopf hinweg, um eine Abweisung des Windes zu bewirken.

Die Funktionsöffnungen sind bevorzugt in etwa im Mittenbereich der Abweiservorrichtung, beispielsweise in der Nähe des insbesondere als Halteleiste ausgebildeten Halteteils, angeordnet.

Gegebenenfalls ist vorgesehen, dass die Bodenschürze und der Windschirm je einen eigenen Grundkörper umfassen. Diese beiden Grundkörper können unterschiedliche Steifigkeiten aufweisen, sodass auch die Bodenschürze und der Windschirm unterschiedliche Steifigkeiten haben.

Gegebenenfalls ist vorgesehen, dass der Windschirm und/oder die Bodenschürze mehrschichtig ausgebildet sind und insbesondere zwei oder mehr parallel zueinander verlaufende Grundkörper aufweisen.

Gegebenenfalls ist vorgesehen, dass das Halteteil zur Halterung des Windschirms und/oder der Bodenschürze als Halteleiste ausgebildet ist. Bevorzugt sind der Windschirm und/oder die Bodenschürze über ein Klemmteil mit dem Halteteil, insbesondere mit der Halteleiste, verbunden.

In allen Ausführungsformen können die Einschnitte schlitzförmig oder nutförmig ausgebildet sein, und eine freie Breite entlang der Längsrichtung von wenigen Millimetern aufweisen, oder bevorzugt im Wesentlichen geschlossen sein. Bei geschlossenen Einschnitten liegen die beiden benachbarten Lamellen zumindest abschnittsweise direkt aneinander an. Im Bereich der Funktionsöffnung ist jedoch bevorzugt ein Freiraum freigehalten. Sobald benachbarte Lamellen unterschiedlich aufgebogen sind, werden dadurch ebenfalls Öffnungen gebildet, die jedoch im Wesentlichen entlang der Längsrichtung geöffnet sind.

In weiterer Folge wird die Erfindung anhand von schematisch dargestellten Ausführungsformen der Erfindung weiter beschrieben.

Die Figuren 1a, 1b und 1c zeigen drei unterschiedliche schematische Ansichten einer Anordnung.

Die Figuren 2a, 2b und 2c zeigen drei schematische Schnittdarstellungen von Details dreier unterschiedlicher Ausführungsformen.

Wenn nicht anders angegeben, so entsprechen die Bezugszeichen folgenden Komponenten:
Gleisanordnung 1, Halteleiste 2, Bodenschürze 3, Windschirm 4, Untergrund 5, Haupteinschnitt 6, Außenkante 7, Funktionsöffnung 8, Nebeneinschnitt 9, Bodenlamelle 10, Oberfläche 11, Windlamelle 12, Grundkörper 13, Längsrichtung 14, Schiene 15, Eisenbahnschwelle 16, Gleisunterbau 17, Außenseite (der Schiene) 18, Haltevorrichtung 19, Schienenkopf 20.

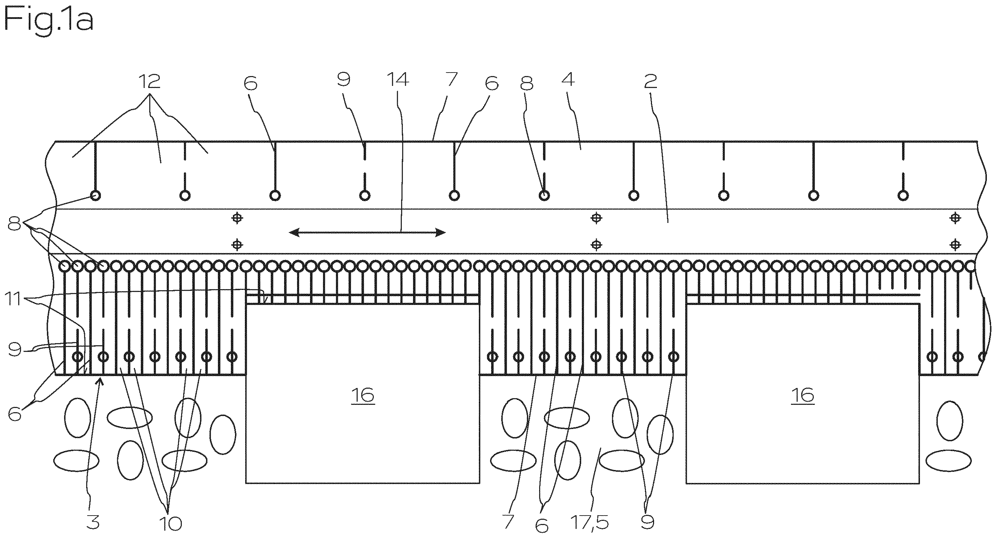

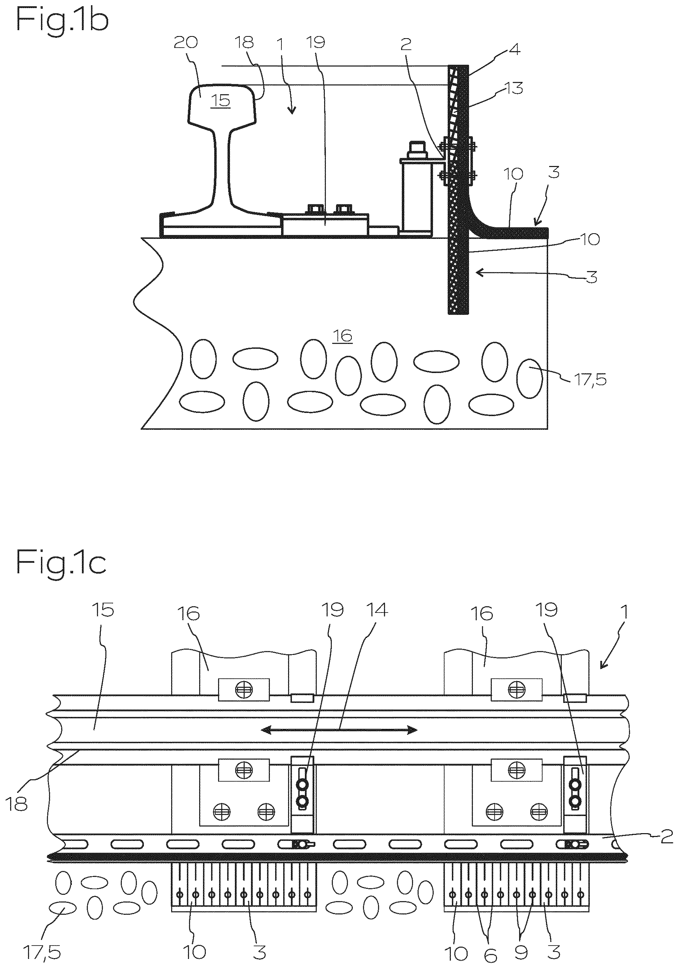

Die Figuren 1a, 1b und 1c zeigen unterschiedliche schematische Ansichten einer Ausführungsform einer erfindungsgemäßen Abweiservorrichtung, die zusammen mit einer Gleisanordnung 1 eine erfindungsgemäße Anordnung bildet. Figur 1a zeigt eine schematische Seitenansicht von außen, wobei Teile der Gleisanordnung 1, wie insbesondere die Schiene 15, durch die Abweiservorrichtung verdeckt sind. Figur 1b zeigt eine schematische Ansicht bzw. eine Schnittdarstellung, wobei die Blickrichtung im Wesentlichen entlang der Längsrichtung 14 verläuft. Figur 1c zeigt eine schematische Ansicht von oben.

Die Anordnung umfasst eine Gleisanordnung 1, die mindestens eine Schiene 15 und mindestens eine Eisenbahnschwelle 16 umfasst. Insbesondere umfasst die Gleisanordnung 1 zwei Schienen 15 und eine Vielzahl an Eisenbahnschwellen 16. Der Gleisunterbau 17 ist in der vorliegenden Ausführungsform als Schotterbett ausgebildet, das je nach Definition auch den Untergrund 5 bildet.

Beabstandet zur Außenseite 18 der Schiene 15 verläuft, insbesondere entlang der Längsrichtung 14, eine Abweiservorrichtung. Die Abweiservorrichtung ist über eine Haltevorrichtung 19 mit der Gleisanordnung 1 verbunden. Insbesondere kann im Bereich einer oder mehrerer Eisenbahnschwellen 16 je eine Haltevorrichtung 19 angeordnet sein.

Die Abweiservorrichtung umfasst mindestens ein Halteteil, das in der vorliegenden Ausführungsform als entlang der Längsrichtung 14 verlaufende Halteleiste 2 ausgebildet ist. An der Halteleiste 2 sind eine Bodenschürze 3 und ein Windschirm 4 angebracht. Die Bodenschürze 3 erstreckt sich von der Halteleiste 2 Richtung der Oberfläche 11. Die Oberfläche 11 ist in der vorliegenden Ausführungsform abwechselnd durch die Eisenbahnschwellen 16 und den Gleisunterbau 17, insbesondere das Schotterbett, gebildet. Die Bodenschürze 3 liegt an der unebenen Oberfläche 11 auf und ist in ihrer Form an die Form der unebenen Oberfläche 11 angepasst. Durch diese Anpassung kann eine Abdeckung in dem gewünschten Ausmaß erfolgen. Um eine verbesserte Anpassbarkeit der Bodenschürze 3 an die unebene Oberfläche 11 zu bewirken, weist die Bodenschürze 3 mehrere Einschnitte, insbesondere mehrere Haupteinschnitte 6, auf. Diese Haupteinschnitte 6 erstrecken sich jeweils von der Außenkante 7 der Bodenschürze 3 bis in eine Funktionsöffnung 8 der Bodenschürze 3.

Durch die Einschnitte, insbesondere durch die Haupteinschnitte 6, werden Bodenlamellen 10 begrenzt oder gebildet, die insbesondere streifenförmig ausgebildet sind.

Gemäß dieser Ausführungsform sind zusätzlich zu den Haupteinschnitten 6 auch mehrere Nebeneinschnitte 9 vorgesehen. Auch diese Nebeneinschnitte 9 erstrecken sich jeweils von der Außenkante 7 der Bodenschürze 3 in eine Funktionsöffnung 8, wobei die Nebeneinschnitte 9 in einem Bereich zwischen den Funktionsöffnungen 8 und der Außenkante 7 unterbrochen sind. Dadurch können zwei nebeneinanderliegende Bodenlamellen 10 in ihrem Mittenbereich miteinander verbunden sein.

Die Funktionsöffnungen 8 weisen eine abgerundete Form auf und sind als Durchgangsöffnung in der Bodenschürze 3 ausgebildet. Insbesondere weisen die Funktionsöffnungen 8 in der vorliegenden Ausführungsform eine runde Form auf.

Durch diese abgerundete Form wird ein weiteres Einreißen der Einschnitte bei mechanischer Belastung verhindert. Überdies bilden die Funktionsöffnungen 8 Löcher, durch die Luft, insbesondere ein Teilvolumenstrom des Windes, hindurchtreten kann.

Ferner weisen die Funktionsöffnungen 8 entlang der Längsrichtung 14 eine größere freie Breite auf als die Einschnitte. Dadurch weisen die von den Einschnitten begrenzten Bodenlamellen 10 im Bereich zwischen den Funktionsöffnungen 8 eine entlang der Längsrichtung 14 gemessene kleinere Breite auf, als im Bereich zwischen den Einschnitten. Hierdurch wird durch die Funktionsöffnungen 8 ein Gelenk gebildet.

Gemäß der vorliegenden Ausführungsform weist auch der Windschirm 4 mehrere Windlamellen 12 auf, die durch Einschnitte des Windschirms 4 begrenzt oder gebildet sind. Insbesondere sind mehrere Haupteinschnitte 6 vorgesehen, die sich jeweils von der Außenkante 7 des Windschirms 4 bis zur Funktionsöffnung 8 des Windschirms 4 erstrecken.

Überdies umfasst der Windschirm 4 gemäß der vorliegenden Ausführungsform Nebeneinschnitte 9, die sich von der Außenkante 7 des Windschirms 4 jeweils bis in eine Funktionsöffnung 8 des Windschirms 4 erstrecken.

Die grundsätzliche Konfiguration des Windschirms 4 kann der grundsätzlichen Konfiguration der Bodenschürze 3 entsprechen, wobei in der vorliegenden Ausführungsform die Windlamellen 12 entlang der Längsrichtung 14 eine größere Breite aufweisen als die Bodenlamellen 10.

Wie insbesondere in Figur 1b ersichtlich, sind die Bodenlamellen 10 verformt, um sich an die Oberfläche 11 anzupassen. Insbesondere im Bereich der Eisenbahnschwellen 16 sind die Bodenlamellen 10 nach außen gebogen. Im Bereich zwischen den Eisenbahnschwellen 16 verlaufen die Bodenlamellen 10 weniger stark gebogen Richtung Oberfläche 11 und sind insbesondere am Gleisunterbau 17 abgestützt. Durch diese Anpassung der Bodenschürze 3 an die Oberfläche 11 ist der Bereich zwischen der Halteleiste 2 und der Oberfläche 11 durch die Bodenschürze 3 abgedeckt.

Um dennoch einen Teilvolumenstrom des Windes in durchzulassen, sind die Funktionsöffnungen 8 als Durchgangsöffnung ausgebildet. Durch die Wahl der Größe dieser Öffnungen kann eine gezielte Wahl des durchtretenden Volumenstroms erfolgen.

Die Bodenschürze 3 und der Windschirm 4 können einen oder mehrere Grundkörper 13 umfassen.

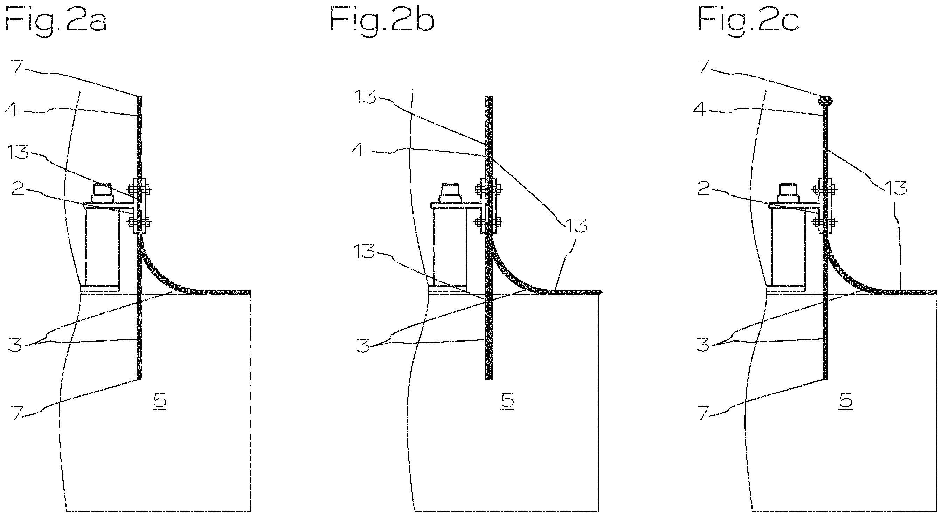

Figur 2a zeigt beispielsweise eine Ausführungsform, bei der ein einziger durchgehender Grundkörper 13 vorgesehen ist, der sowohl die Bodenschürze 3 als auch den Windschirm 4 bildet. Dieser Grundkörper 13 ist in seinem Mittenbereich also zwischen den beiden Außenkanten 7 mit der Halteleiste 2 verbunden und ragt von der Halteleiste 2 einerseits Richtung Untergrund 5 und andererseits nach oben. Dieser Grundkörper 13 der Figur 2a kann beispielsweise durch ein Elastomerband gebildet sein. Dieses Entlastomerband wird zur Bildung der Lamellen von beiden Seiten mit Einschnitten versehen. Diese Einschnitte verlaufen erfindungsgemäß bis zu Funktionsöffnungen 8. Diese Funktionsöffnungen 8 können beispielsweise zuvor, vor der Bildung der Einschnitte, durch Querbohrungen gebildet werden.

Figur 2b zeigt eine Ausführungsform, bei der mehrere Grundkörper 13 vorgesehen sind. So verlaufen im Bereich der Bodenschürze 3 und des Windschirms 4 jeweils zwei Grundkörper 13 parallel zueinander. Die Bodenschürze 3 und der Windschirm 4 sind dadurch mehrschichtig, insbesondere zweischichtig, aufgebaut.

Dieser mehrschichtige Aufbau kann insbesondere dazu verwendet werden, die Steifigkeit der Bodenschürze 3 bzw. des Windschirms 4 anzupassen.

Insbesondere umfassen die Bodenschürze 3 und der Windschirm 4 je einen eigenen Grundkörper 13. Dadurch kann der Grundkörper 13 des Windschirms 4 beispielsweise steifer ausgebildet sein, als der Grundkörper 13 der Bodenschürze 3. Der Grundkörper 13 des Windschirms 4 aus einem steiferen Material wirkt dadurch als Verstärkung zur Erhöhung der Festigkeit des Windschirms 4.

In der Ausführungsform der Figur 2b ist zusätzlich zu den beiden Grundkörpern 13 mit unterschiedlichen Steifigkeiten auch ein durchgehender Grundkörper 13, wie in Figur 2a gezeigt, vorgesehen. Dieser durchgehende Grundkörper 13 verläuft parallel zu den beiden anderen Grundkörpern 13 und liegt insbesondere an diesen Grundkörpern 13 an.

Figur 2c zeigt eine weitere Ausführungsform, bei der der Grundkörper 13 des Windschirms 4 mit einer Verstärkungswulst versehen ist. Diese Verstärkungswulst verläuft in dieser Ausführungsform entlang der Außenkante 7 des Windschirms 4.

Bevorzugt erstrecken sich die Funktionsöffnungen 8 in allen Ausführungsformen als Durchgangsöffnungen durch die Bodenschürze 3 und/oder den Windschirm 4.

Bevorzugt ist die Gleisanordnung 1 in allen Ausführungsformen als herkömmliche Gleisanordnung 1 ausgebildet, an der jedoch erfindungsgemäß die Abweiservorrichtung angebracht ist. Bevorzugt ist die erfindungsgemäße Abweiservorrichtung im Bereich einer Weiche der Gleisanordnung 1 angeordnet. Besonders bevorzugt sind zwei Abweiservorrichtungen beidseitig der Gleisanordnung 1 angeordnet, sodass die mindestens eine Schiene 15, insbesondere beide Schienen 15 oder die Weiche zwischen den beiden Abweiservorrichtungen angeordnet ist oder sind.

In allen Ausführungsformen kann gegebenenfalls vorgesehen sein, dass die Einschnitte, insbesondere die Haupteinschnitte 6 und/oder die Nebeneinschnitte 9 im Wesentlichen normal zur Längsrichtung 14, und in der bestimmungsgemäßen Einbaulage im Wesentlichen senkrecht verlaufen. Es ist jedoch durchaus vorstellbar, dass die Einschnitte schräg zur Außenkante 7 bzw. schräg zur Längsrichtung 14 verlaufen. In den dargestellten Ausführungsformen verlaufen alle Einschnitte im Wesentlichen parallel zueinander. Es ist jedoch durchaus vorstellbar, dass die Einschnitte schräg zueinander verlaufen.

Gemäß einer nicht dargestellten Ausführungsform umfasst die Anordnung mindestens einen Windschirm, der quer zum Schienenverlauf angeordnet ist oder quer zum Schienenverlauf verläuft. Dieser Windschirm verläuft insbesondere zwischen zwei Schienen einer Gleisanordnung und wirkt dadurch als Windabweiser gegen Luftbewegungen, die entlang des Schienenverlaufs strömen. Insbesondere können zwei derartige Windschirme vorgesehen sein - beispielsweise am Anfang eines zu schützenden Abschnittes und am Ende eines zu schützenden Abschnitts. Der quer verlaufende Windschirm kann gleich ausgebildet sein wie bei der längs verlaufenden Abweiservorrichtung und von einer Halteleiste nach oben ragen.

Gegebenenfalls ist an dieser Halteleiste, die quer zum Schienenverlauf verläuft, auch eine Bodenschürze vorgesehen, die eine Abdichtung gegenüber dem Untergrund bewirkt.

Gegebenenfalls verläuft der quer verlaufende Windschirm im Bereich einer Schwelle der Gleisanordnung. Gegebenenfalls verläuft der quer verlaufende Windschirm im Bereich zwischen zwei Schwellen der Gleisanordnung. Bevorzugt ist der Windschirm und insbesondere die Halteleiste des Windschirms an einer quer verlaufenden Schwelle angebracht.

In allen Ausführungsformen kann alternativ vorgesehen sein, dass der Windschirm durchgehend und daher nicht geschlitzt ausgebildet ist. Jedoch können auch gemäß dieser alternativen Ausführungsform Funktionsöffnungen vorgesehen sein, die den Windschirm durchsetzen, sodass ein Luftstrom durch den Windschirm hindurchgelassen wird. Alternativ können jedoch auch diese Funktionsöffnungen im Windschirm entfallen, solange sichergestellt ist, dass ausreichend Luft durch die Funktionsöffnungen der Bodenschürze hindurchtreten kann. Gemäß jeder Ausführungsform, bei der der Windschirm nicht geschlitzt, also insbesondere durchgehend ausgebildet ist, können ein oder mehrere Verstärkungswulste entlang der Längserstreckungsrichtung des Windschirms angeordnet sein. Beispielsweise kann eine Verstärkungswulst wie in Fig. 2c vorgesehen sein. Gegebenenfalls kann mindestes eine weitere derartige Verstärkungswulst vorgesehen sein, die beispielsweise im Mittenbereich verläuft. Durch eine derartige Verstärkungswulst wird beispielsweise die Biegesteifigkeit des Windschirms verbessert.

In allen Ausführungsformen ist bevorzugt vorgesehen, dass die Bodenschürze und/oder der Windschirm über einen Schnellverschluss, insbesondere über einen werkzeuglos betätigbaren Verschluss, mit der Gleisanordnung verbunden ist oder sind. Dadurch kann die Abweiservorrichtung oder zumindest Teile der Abweiservorrichtung schnell und einfach entfernt und montiert werden. Beispielsweise ist die Halteleiste mit Montageöffnungen versehen, durch die Fortsätze einführbar sind. Diese Fortsätze können beispielsweise starr oder fest mit der Gleisanordnung verbunden sein. Die Fixierung der Lage der Halteleiste an diesen Fortsätzen kann beispielsweise über werkzeuglos bedienbare Elemente, wie beispielsweise einen Splint, eine Flügelmutter oder ähnliche bekannte Elemente, erfolgen.

## Patentansprüche

1. Abweiservorrichtung zum Schutz einer Gleisanordnung (1) und insbesondere einer Weiche vor Umwelteinflüssen, wie Wind, Schnee oder Sand,
- umfassend eine langgestreckte, entlang einer Längsrichtung (14) verlaufende Halteleiste (2) zur Anbringung seitlich neben der Gleisanordnung (1),
- wobei an der Halteleiste (2) eine flexible Bodenschürze (3) und ein flexibler Windschirm (4) angebracht sind,
- wobei die Bodenschürze (3), der langgestreckten Kontur der Halteleiste (2) folgend, von der Halteleiste (2) Richtung Untergrund (5) absteht,
- wobei der Windschirm (4), der langgestreckten Kontur der Halteleiste (2) folgend, von der Halteleiste (2) nach oben absteht,
**dadurch gekennzeichnet,**
- **dass** in der Bodenschürze (3) Haupteinschnitte (6) vorgesehen sind, die sich jeweils schlitzförmig von der Außenkante (7) der Bodenschürze (3) bis in eine Funktionsöffnung (8) mit einer abgerundeten Form erstrecken.

2. Abweiservorrichtung nach Anspruch 1, **dadurch gekennzeichnet, dass** in der Bodenschürze (3) Nebeneinschnitte (9) vorgesehen sind, die sich jeweils abschnittsweise schlitzförmig von der Außenkante (7) der Bodenschürze (3) bis in eine Funktionsöffnung (8) mit einer abgerundeten Form erstrecken, jedoch in einem Bereich zwischen der Außenkante (7) und der Funktionsöffnung (8) unterbrochen sind.

3. Abweiservorrichtung nach Anspruch 1 oder 2, **dadurch gekennzeichnet,**
- **dass** die Bodenschürze (3) mehrere flexible Bodenlamellen (10) zur Anpassung der Bodenschürze (3) an eine unebene Oberfläche (11) umfasst,
- und **dass** die Bodenlamellen (10) durch die in der Bodenschürze (3) vorgesehenen Haupteinschnitte (6) und gegebenenfalls durch die in der Bodenschürze (3) vorgesehenen Nebeneinschnitte (9) gebildet sind.

4. Abweiservorrichtung nach einem der vorangegangenen Ansprüche, **dadurch gekennzeichnet, dass** in dem Windschirm (4) Haupteinschnitte (6) vorgesehen sind, die sich jeweils schlitzförmig von der Außenkante (7) des Windschirms (4) bis in eine Funktionsöffnung (8) mit einer abgerundeten Form erstrecken, oder dass der Windschirm (4) durchgehend und unterbrechungsfrei ausgebildet ist.

5. Abweiservorrichtung nach einem der vorangegangenen Ansprüche, **dadurch gekennzeichnet, dass** in dem Windschirm (4) Nebeneinschnitte (9) vorgesehen sind, die sich jeweils abschnittsweise schlitzförmig von der Außenkante (7) des Windschirms (4) bis in eine Funktionsöffnung (8) mit einer abgerundeten Form erstrecken, jedoch in einem Bereich zwischen der Außenkante (7) und der Funktionsöffnung (8) unterbrochen sind.

6. Abweiservorrichtung nach Anspruch 4 oder 5, **dadurch gekennzeichnet,**
- **dass** der Windschirm (4) mehrere flexible Windlamellen (12) umfasst,
- und **dass** die Windlamellen (12) durch die im Windschirm (4) vorgesehenen Haupteinschnitte (6) und gegebenenfalls durch die im Windschirm (4) vorgesehenen Nebeneinschnitte (9) gebildet sind.

7. Abweiservorrichtung nach einem der vorangegangenen Ansprüche, **dadurch gekennzeichnet,**
- **dass** die Bodenschürze (3) und der Windschirm (4) einen einzigen bandförmigen Grundkörper (13) aus einem elastischen Material umfassen,
- **dass** der bandförmige Grundkörper (13) in seinem Mittenbereich entlang der Längsrichtung (14) mit der Halteleiste (2) verbunden ist, und
- **dass** der Grundkörper (13) quer zu seiner Längsrichtung (14) beidseitig von der Halteleiste (2) absteht,
oder
- **dass** die Bodenschürze (3) und der Windschirm (4) je einen bandförmigen Grundkörper (13) aus einem elastischen Material umfassen,
- **dass** die beiden bandförmigen Grundkörper (13) entlang ihrer Längsrichtung (14) mit der Halteleiste (2) verbunden sind, und
- **dass** die Grundkörper (13) jeweils quer zu ihren Längsrichtungen (14) beidseitig von der Halteleiste (2) abstehen.

8. Abweiservorrichtung nach einem der vorangegangenen Ansprüche, **dadurch gekennzeichnet, dass** die Funktionsöffnungen (8) der Bodenschürze (3) und/oder des Windschirms (4) einen freien Querschnitt zwischen 0,5 cm² und 5 cm², insbesondere zwischen 0,5 cm² und 2 cm², aufweisen und/oder dass die Funktionsöffnungen (8) jeweils als Durchgangsöffnung mit abgerundetem oder rundem Querschnitt ausgebildet sind.

9. Abweiservorrichtung nach einem vorangegangenen Ansprüche, **dadurch gekennzeichnet,**
- **dass** die Bodenlamellen (10) streifenförmig ausgebildet sind und eine entlang der Längsrichtung (14) gemessene Breite zwischen 1 cm und 5 cm, insbesondere zwischen 2 cm und 4 cm, aufweisen, und/oder
- **dass** die Bodenlamellen (10) streifenförmig ausgebildet sind und eine quer zur Längsrichtung (14) gemessene Länge zwischen 5 cm und 25 cm, insbesondere zwischen 4 cm und 15 cm, aufweisen.

10. Abweiservorrichtung nach einem vorangegangenen Ansprüche, **dadurch gekennzeichnet**
- **dass** die Windlamellen (12) streifenförmig ausgebildet sind und eine entlang der Längsrichtung (14) gemessene Breite zwischen 5 cm und 20 cm, insbesondere zwischen 8 cm und 12 cm, aufweisen, und/oder
- **dass** die Windlamellen (12) streifenförmig ausgebildet sind und eine quer zur Längsrichtung (14) gemessene Länge zwischen 5 cm und 15 cm, insbesondere zwischen 5 cm und 10 cm, aufweisen.

11. Abweiservorrichtung nach einem der vorangegangenen Ansprüche, **dadurch gekennzeichnet, dass** die Windlamellen (12) und/oder die Bodenlamellen (10) in den Bereichen zwischen den Funktionsöffnungen (8) eine geringere entlang der Längsrichtung (14) gemessene Breite aufweisen als in den Bereichen zwischen den Schlitzen.

12. Abweiservorrichtung nach einem der Ansprüche 2 bis 11, **dadurch gekennzeichnet, dass** die Einschnitte, insbesondere die Haupteinschnitte (6) und/oder die Nebeneinschnitte (9), eine entlang der Längsrichtung (14) gemessene freie Breite aufweisen, die kleiner ist als die entlang der Längsrichtung (14) gemessene freie Breite der Funktionsöffnungen (8) und insbesondere eine entlang der Längsrichtung (14) gemessene freie Breite von 0 cm bis 1 cm aufweisen.

13. Abweiservorrichtung nach einem der Ansprüche 3 bis 12, **dadurch gekennzeichnet,**
- **dass** die Windlamellen (12) und/oder die Bodenlamellen (10) und/oder der oder die Grundkörper (13) aus einem UV-beständigen Elastomer, wie insbesondere EPDM oder aus Weich-PVC, gegebenenfalls mit einer Verstärkungsstruktur, gebildet sind
und/oder
- **dass** die Windlamellen (12) und/oder die Bodenlamellen (10) und/oder der oder die Grundkörper (13) aus einem Band mit einer Dicke von 0,2 cm bis 0,5 cm und insbesondere von 0,3 cm gebildet sind.

14. Abweiservorrichtung nach einem der vorangegangenen Ansprüche, **dadurch gekennzeichnet,**
- **dass** der Windschirm (4) und/oder die Bodenschürze (3) mehrschichtig ausgebildet sind und insbesondere zwei oder mehr parallel zueinander verlaufende Grundkörper (13) aufweisen, wobei einer der Grundkörper (13), zur Erhöhung der Festigkeit des Windschirms (4) und/oder der Bodenschürze (3) eine größere Steifigkeit aufweist als der parallel verlaufende Grundkörper (13),
und/oder
- **dass** der Grundkörper (13) des Windschirms (4) mit mindestens einer Verstärkungswulst versehen ist, die entlang der Längsrichtung (14) verläuft.

15. **Anordnung,** umfassend eine Gleisanordnung (1) mit mindestens zwei Schienen (15), die über Oberbaukomponenten, wie beispielsweise Eisenbahnschwellen (16), miteinander verbunden und am Gleisunterbau (17), insbesondere am Untergrund (5), abgestützt sind, **dadurch gekennzeichnet, dass** seitlich neben der Außenseite (18) mindestens einer Schiene (15) und dem Schienenverlauf folgend eine Abweiservorrichtung nach einem der vorangegangenen Ansprüche vorgesehen ist.

16. Anordnung nach Anspruch 15, **dadurch gekennzeichnet,**
- **dass** eine Haltevorrichtung (19) vorgesehen ist, über die Halteleiste (2) mit der Gleisanordnung (1) verbunden ist, und/oder der Zwischenraum zwischen der Halteleiste (2) und der darunterliegenden Oberfläche (11) durch die flexibel verformte Bodenschürze (3) abgedeckt ist,
und/oder
- **dass** der Zwischenraum zwischen der Halteleiste (2) und der darunterliegenden Oberfläche (11) durch die flexibel verformte Bodenschürze (3) abgedeckt ist.

17. Anordnung nach Anspruch 15 oder 16, **dadurch gekennzeichnet,**
- **dass** sich der Windschirm (4) bis zum Niveau des Schienenkopfes (20) erstreckt,
- oder dass der Windschirm (4) den Schienenkopf (20) nach oben überragt,
- und insbesondere dass der Windschirm (4) das Niveau des Schienenkopfs (20) nach oben um 1 cm bis 5 cm, vorzugsweise um 2 cm, überragt.

18. Anordnung nach einem der Ansprüche 15 bis 17, **dadurch gekennzeichnet, dass**, beidseitig, seitlich neben den Außenseiten (18) der Schienen (15) und dem Schienenverlauf folgend, je eine Abweiservorrichtung nach einem der Ansprüche 1 bis 14 vorgesehen ist, und dass die Schienen (15) und insbesondere die Weiche zwischen den beiden Abweiservorrichtung angeordnet sind.

19. Anordnung nach einem der Ansprüche 15 bis 18, **dadurch gekennzeichnet,**
- **dass** die Bodenschürze (3) und/oder der Windschirm (4) über einen Schnellverschluss, insbesondere über einen werkzeuglos betätigbaren Verschluss, mit der Gleisanordnung verbunden ist oder sind,
oder
- **dass** mindestens ein quer zum Schienenverlauf verlaufender Windschirm (4) vorgesehen ist, der insbesondere zwischen zwei Schienen der Gleisanordnung verläuft und als Windabweiser gegen entlang des Schienenverlaufs verlaufende Luftbewegungen wirkt.

## Claims

1. A deflection device for protecting a track arrangement (1) and in particular a track switch from environmental influences such as wind, snow or sand,
- comprising an elongated retaining ledge (2) extending along a longitudinal direction (14) for mounting laterally next to the track arrangement (1),
- wherein a flexible ground skirt (3) and a flexible windscreen (4) are attached to the retaining ledge (2),
- wherein the ground skirt (3), following the elongated contour of the retaining ledge (2), projects from the retaining ledge (2) in the direction of the ground (5),
- wherein the windscreen (4), following the elongated contour of the retaining ledge (2), projects upwards from the retaining ledge (2),
**characterized**
- **in that** main incisions (6) are provided in the ground skirt (3), each of which extends in the form of a slot from the external edge (7) of the ground skirt (3) into a functional opening (8) with a rounded shape.

2. The deflection device according to claim 1, **characterized in that** secondary incisions (9) are provided in the ground skirt (3), each of which extends in the form of a slot in sections from the external edge (7) of the ground skirt (3) into a functional opening (8) with a rounded shape, but are interrupted in a region between the external edge (7) and the functional opening (8).

3. The deflection device according to claim 1 or 2, **characterized**
- **in that** the ground skirt (3) comprises a plurality of flexible ground slats (10) for adapting the ground skirt (3) to an uneven surface (11),
- and **in that** the ground slats (10) are formed by the main incisions (6) provided in the ground skirt (3) and, optionally, by the secondary incisions (9) provided in the ground skirt (3).

4. The deflection device according to one of the preceding claims, **characterized in that** main incisions (6) are provided in the windscreen (4), each of which extends in the form of a slot from the external edge (7) of the windscreen (4) into a functional opening (8) with a rounded shape, or **in that** the windscreen (4) is designed to be continuous and uninterrupted.

5. The deflection device according to one of the preceding claims, **characterized in that** secondary incisions (9) are provided in the windscreen (4), each of which extends in the form of a slot in sections from the external edge (7) of the windscreen (4) into a functional opening (8) with a rounded shape, but are interrupted in a region between the external edge (7) and the functional opening (8).

6. The deflection device according to claim 4 or 5, **characterized**
- **in that** the windscreen (4) comprises a plurality of flexible wind slats (12),
- and **in that** the wind slats (12) are formed by the main incisions (6) provided in the windscreen (4) and, optionally, by the secondary incisions (9) provided in the windscreen (4).

7. The deflection device according to one of the preceding claims, **characterized**
- **in that** the ground skirt (3) and the windscreen (4) comprise a single strip-shaped base body (13) formed from an elastic material,
- **in that** the strip-shaped base body (13) is connected in its centre region along the longitudinal direction (14) to the retaining ledge (2), and
- **in that** the base body (13) projects from both sides of the retaining ledge (2) transversely to its longitudinal direction (14),
or
- **in that** the ground skirt (3) and the windscreen (4) each comprise a strip-shaped base body (13) formed from an elastic material,
- **in that** the two strip-shaped base bodies (13) are connected to the retaining ledge (2) along their longitudinal direction (14), and
- **in that** the base bodies (13) each project from both sides of the retaining ledge (2) transversely to their longitudinal directions (14).

8. The deflection device according to one of the preceding claims, **characterized in that** the functional openings (8) of the ground skirt (3) and/or of the windscreen (4) have a free cross-section of between 0.5 cm² and 5 cm², in particular between 0.5 cm² and 2 cm², and/or **in that** the functional openings (8) are each designed as a through opening with a rounded or circular cross-section.

9. The deflection device according to one of the preceding claims, **characterized**
- **in that** the ground slats (10) are strip-shaped and have a width, measured along the longitudinal direction (14), of between 1 cm and 5 cm, in particular between 2 cm and 4 cm, and/or
- **in that** the ground slats (10) are strip-shaped and have a length, measured transversely to the longitudinal direction (14), of between 5 cm and 25 cm, in particular between 4 cm and 15 cm.

10. The deflection device according to one of the preceding claims, **characterized**
- **in that** the wind slats (12) are strip-shaped and have a width, measured along the longitudinal direction (14), of between 5 cm and 20 cm, in particular between 8 cm and 12 cm, and/or
- **in that** the wind slats (12) are strip-shaped and have a length, measured transversely to the longitudinal direction (14), of between 5 cm and 15 cm, in particular between 5 cm and 10 cm.

11. The deflection device according to one of the preceding claims, **characterized in that** the wind slats (12) and/or the ground slats (10) have a smaller width, measured along the longitudinal direction (14), in the areas between the functional openings (8) than in the areas between the slots.

12. The deflection device according to one of claims 2 to 11, **characterized in that** the incisions, in particular the main incisions (6) and/or the secondary incisions (9), have a free width, measured along the longitudinal direction (14), which is smaller than the free width of the functional openings (8), measured along the longitudinal direction (14), and in particular have a free width of 0 cm to 1 cm, measured along the longitudinal direction (14).

13. The deflection device according to one of claims 3 to 12, **characterized**
- **in that** the wind slats (12) and/or the ground slats (10) and/or the base body or base bodies (13) are formed from a UV-resistant elastomer, such as in particular EPDM or soft PVC, optionally with a reinforcing structure
and/or
- **in that** the wind slats (12) and/or the ground slats (10) and/or the base body or base bodies (13) are formed from a strip with a thickness of 0.2 cm to 0.5 cm and in particular of 0.3 cm.

14. The deflection device according to one of the preceding claims, **characterized**
- **in that** the windscreen (4) and/or the ground skirt (3) are multi-layered and in particular have two or more base bodies (13) extending parallel to one another, wherein one of the base bodies (13) has a greater rigidity than the parallel base body (13) in order to increase the strength of the windscreen (4) and/or the ground skirt (3),
and/or
- **in that** the base body (13) of the windscreen (4) is provided with at least one reinforcing bead which extends along the longitudinal direction (14).

15. **An arrangement** comprising a track arrangement (1) with at least two rails (15), which are connected to one another via superstructure components, such as, for example, railway sleepers (16), and are supported on the track substructure (17), in particular on the ground (5), **characterized in that** a deflection device according to one of the preceding claims is provided laterally next to the outer side (18) of at least one rail (15) and following the course of the rail.

16. The arrangement according to claim 15, **characterized**
- **in that** a retaining device (19) is provided, is connected to the track arrangement (1) via the retaining ledge (2), and/or the space between the retaining ledge (2) and the underlying surface (11) is covered by the flexibly deformed ground skirt (3),
and/or
- **in that** the space between the retaining ledge (2) and the underlying surface (11) is covered by the flexibly deformed ground skirt (3).

17. The arrangement according to claim 15 or 16, **characterized**
- **in that** the windscreen (4) extends up to the level of the rail head (20),
- or in that the windscreen (4) projects upwards beyond the rail head (20),
- and in particular in that the windscreen (4) projects upwards beyond the level of the rail head (20) by 1 cm to 5 cm, preferably by 2 cm.

18. The arrangement according to one of claims 15 to 17, **characterized in that** a deflection device according to one of claims 1 to 14 is provided on each side, laterally next to the outer sides (18) of the rails (15) and following the course of the rails, and **in that** the rails (15) and in particular the track switch are arranged between the two deflection devices.

19. The arrangement according to one of claims 15 to 18, **characterized**
- **in that** the ground skirt (3) and/or the windscreen (4) is or are connected to the track arrangement via a quick-release fastener, in particular via a fastener that can be actuated without tools,
or
- **in that** at least one windscreen (4) is provided which extends transversely to the course of the rails, runs in particular between two rails of the track arrangement and acts as a wind deflector against air movements running along the course of the rails.

## Revendications

1. Dispositif déflecteur pour la protection d'un agencement de voie (1) et en particulier d'un aiguillage contre les influences de l'environnement, telles que le vent, la neige ou le sable,
- comprenant une barre de retenue (2) allongée, s'étendant le long d'une direction longitudinale (14), destinée à être placée latéralement à côté de l'agencement de voie (1),
- dans lequel un tablier de sol (3) flexible et un pare-vent (4) flexible sont montés sur la barre de retenue (2),
- dans lequel le tablier de sol (3), suivant le contour allongé de la barre de retenue (2), dépasse de la barre de retenue (2) en direction du sol (5),
- dans lequel le pare-vent (4), suivant le contour allongé de la barre de retenue (2), dépasse vers le haut à partir de la barre de retenue (2),
**caractérisé**
- **en ce que** des entailles principales (6) sont prévues dans le tablier de sol (3), lesquelles s'étendent respectivement en forme de fente depuis le bord extérieur (7) du tablier de sol (3) jusque dans une ouverture fonctionnelle (8) de forme arrondie.

2. Dispositif déflecteur selon la revendication 1, **caractérisé en ce que** des entailles secondaires (9) sont prévues dans le tablier de sol (3), lesquelles s'étendent respectivement par sections en forme de fente depuis le bord extérieur (7) du tablier de sol (3) jusque dans une ouverture fonctionnelle (8) de forme arrondie, mais sont interrompues dans une zone entre le bord extérieur (7) et l'ouverture fonctionnelle (8).

3. Dispositif déflecteur selon la revendication 1 ou 2, **caractérisé**
- **en ce que** le tablier de sol (3) comprend plusieurs lamelles de sol (10) flexibles pour adapter le tablier de sol (3) à une surface inégale (11),
- et **en ce que** les lamelles de sol (10) sont formées par les entailles principales (6) prévues dans le tablier de sol (3) et, le cas échéant, par les entailles secondaires (9) prévues dans le tablier de sol (3).

4. Dispositif déflecteur selon l'une des revendications précédentes, **caractérisé en ce que** des entailles principales (6) sont prévues dans le pare-vent (4), lesquelles s'étendent respectivement en forme de fente depuis le bord extérieur (7) du pare-vent (4) jusque dans une ouverture fonctionnelle (8) de forme arrondie, ou **en ce que** le pare-vent (4) est réalisé de manière continue et sans interruption.

5. Dispositif déflecteur selon l'une des revendications précédentes, **caractérisé en ce que** des entailles secondaires (9) sont prévues dans le pare-vent (4), lesquelles s'étendent respectivement par sections en forme de fente depuis le bord extérieur (7) du pare-vent (4) jusque dans une ouverture fonctionnelle (8) de forme arrondie, mais sont interrompues dans une zone entre le bord extérieur (7) et l'ouverture fonctionnelle (8).

6. Dispositif déflecteur selon la revendication 4 ou 5, **caractérisé,**
- **en ce que** le pare-vent (4) comprend plusieurs lamelles de vent (12) flexibles,
- et **en ce que** les lamelles de vent (12) sont formées par les entailles principales (6) prévues dans le pare-vent (4) et, le cas échéant, par les entailles secondaires (9) prévues dans le pare-vent (4).

7. Dispositif déflecteur selon l'une des revendications précédentes, **caractérisé**
- **en ce que** le tablier de sol (3) et le pare-vent (4) comprennent un seul corps de base (13) rubané en un matériau élastique,
- **en ce que** le corps de base (13) rubané est relié à la barre de retenue (2) dans sa zone centrale le long de la direction longitudinale (14), et
- **en ce que** le corps de base (13) dépasse des deux côtés de la barre de retenue (2), transversalement à sa direction longitudinale (14),
ou
- **en ce que** le tablier de sol (3) et le pare-vent (4) comprennent chacun un corps de base (13) rubané en un matériau élastique,
- **en ce que** les deux corps de base (13) rubanés sont reliés à la barre de retenue (2) le long de leur direction longitudinale (14), et
- **en ce que** les corps de base (13) dépassent chacun des deux côtés de la barre de retenue (2), transversalement à leurs directions longitudinales (14).

8. Dispositif déflecteur selon l'une des revendications précédentes, **caractérisé en ce que** les ouvertures fonctionnelles (8) du tablier de sol (3) et/ou du pare-vent (4) présentent une section libre comprise entre 0,5 cm² et 5 cm², en particulier entre 0,5 cm² et 2 cm², et/ou **en ce que** les ouvertures fonctionnelles (8) sont chacune conçues comme des ouvertures de passage à section arrondie ou ronde.

9. Dispositif déflecteur selon l'une des revendications précédentes, **caractérisé**
- **en ce que** les lamelles de sol (10) sont réalisées en forme de bande et présentent une largeur, mesurée le long de la direction longitudinale (14), comprise entre 1 cm et 5 cm, en particulier entre 2 cm et 4 cm, et/ou
- **en ce que** les lamelles de sol (10) sont réalisées en forme de bande et présentent une longueur, mesurée transversalement à la direction longitudinale (14), comprise entre 5 cm et 25 cm, en particulier entre 4 cm et 15 cm.

10. Dispositif déflecteur selon l'une des revendications précédentes **caractérisé**
- **en ce que** les lamelles de vent (12) sont réalisées en forme de bande et présentent une largeur, mesurée le long de la direction longitudinale (14), comprise entre 5 cm et 20 cm, en particulier entre 8 cm et 12 cm, et/ou
- **en ce que** les lamelles de vent (12) sont réalisées en forme de bande et présentent une longueur, mesurée transversalement à la direction longitudinale (14), comprise entre 5 cm et 15 cm, en particulier entre 5 cm et 10 cm.

11. Dispositif déflecteur selon l'une des revendications précédentes, **caractérisé en ce que** les lamelles de vent (12) et/ou les lamelles de sol (10) présentent une largeur, mesurée le long de la direction longitudinale (14), plus faible dans les zones entre les ouvertures fonctionnelles (8) que dans les zones entre les fentes.

12. Dispositif déflecteur selon l'une des revendications 2 à 11, **caractérisé en ce que** les entailles, en particulier les entailles principales (6) et/ou les entailles secondaires (9), présentent une largeur libre mesurée le long de la direction longitudinale (14) qui est inférieure à la largeur libre des ouvertures fonctionnelles (8) mesurée le long de la direction longitudinale (14) et présentent en particulier une largeur libre mesurée le long de la direction longitudinale (14) comprise entre 0 cm et 1 cm.

13. Dispositif déflecteur selon l'une des revendications 3 à 12, **caractérisé**
- **en ce que** les lamelles de vent (12) et/ou les lamelles de sol (10) et/ou le ou les corps de base (13) sont formés d'un élastomère résistant aux UV, comme en particulier l'EPDM, ou de PVC souple, éventuellement avec une structure de renforcement,
et/ou
- **en ce que** les lamelles de vent (12) et/ou les lamelles de sol (10) et/ou le ou les corps de base (13) sont formés d'une bande d'une épaisseur de 0,2 cm à 0,5 cm et en particulier de 0,3 cm.

14. Dispositif déflecteur selon l'une des revendications précédentes, **caractérisé**
- **en ce que** le pare-vent (4) et/ou le tablier de sol (3) sont réalisés en plusieurs couches et présentent en particulier deux ou plusieurs corps de base (13) s'étendant parallèlement les uns aux autres, l'un des corps de base (13) présentant, pour augmenter la résistance du pare-vent (4) et/ou du tablier de sol (3), une plus grande rigidité que le corps de base (13) s'étendant parallèlement,
et/ou
- **en ce que** le corps de base (13) du pare-vent (4) est pourvu d'au moins un bourrelet de renforcement qui s'étend le long de la direction longitudinale (14).

15. Agencement comprenant un agencement de voie (1) avec au moins deux rails (15) qui sont reliés entre eux par des composants de superstructure, tels que des traverses de chemin de fer (16), et qui prennent appui sur l'infrastructure de voie (17), en particulier sur le fond (5), **caractérisé en ce qu'**il est prévu, latéralement à côté du côté extérieur (18) d'au moins un rail (15) et en suivant le tracé du rail, un dispositif déflecteur selon l'une des revendications précédentes.

16. Agencement selon la revendication 15, **caractérisé**
- **en ce qu'**il est prévu un dispositif de retenue (19) par l'intermédiaire duquel la barre de retenue (2) est reliée à l'agencement de voie (1), et/ou l'espace entre la barre de retenue (2) et la surface (11) sous-jacente est recouvert par le tablier de sol (3) déformé de manière flexible,
et/ou
- **en ce que** l'espace entre la barre de retenue (2) et la surface sous-jacente (11) est recouvert par le tablier de sol (3) déformé de manière flexible.

17. Agencement selon la revendication 15 ou 16, **caractérisé**
- **en ce que** le pare-vent (4) s'étend jusqu'au niveau du champignon du rail (20),
- ou en ce que le pare-vent (4) dépasse le champignon de rail (20) vers le haut,
- et notamment en ce que le pare-vent (4) dépasse le niveau du champignon de rail (20) vers le haut de 1 cm à 5 cm, de préférence de 2 cm.

18. Agencement selon l'une des revendications 15 à 17, **caractérisé en ce qu'**il est prévu, de part et d'autre, latéralement à côté des faces extérieures (18) des rails (15) et en suivant le tracé des rails, un dispositif déflecteur respectif selon l'une des revendications 1 à 14, et **en ce que** les rails (15) et notamment l'aiguillage sont disposés entre les deux dispositifs déflecteurs.

19. Agencement selon l'une des revendications 15 à 18, **caractérisé**
- **en ce que** le tablier de sol (3) et/ou le pare-vent (4) est ou sont relié(s) à l'agencement de voie par une fermeture rapide, notamment par une fermeture actionnable sans outil,
ou
- **en ce qu'**il est prévu au moins un pare-vent (4) s'étendant transversalement au tracé des rails, qui s'étend en particulier entre deux rails de l'agencement de voie et qui agit comme un déflecteur de vent contre les mouvements d'air s'étendant le long du tracé des rails.
